# EUROPÄISCHE PATENTSCHRIFT

(11) **EP 2 321 602 B1**
(45) Veröffentlichungstag und Bekanntmachung des Hinweises auf die Patenterteilung: **27.03.2013**
(21) Anmeldenummer: 09776058.1
(22) Anmeldetag: 03.08.2009
(51) Int. Cl.: F27B 3/18, F27D 13/00, F27D 17/00, C21C 5/56

(54) **KONTINUIERLICHE SCHROTTZUFÜHRUNG IN EINEN ELEKTRISCHEN SCHMELZOFEN (EAF)**
CONTINUOUS SCRAP SUPPLY INTO AN ELECTRIC ARC FURNACE (EAF)
ACHEMINEMENT CONTINU DE FERRAILLE DANS UN FOUR DE FUSION ÉLECTRIQUE (EAF)

(30) Priorität: 06.08.2008 DE 102008037111
(43) Veröffentlichungstag der Anmeldung: 18.05.2011
(73) Patentinhaber: SMS Siemag Aktiengesellschaft, 40237 Düsseldorf (DE)
(72) Erfinder: FALKENRECK, Udo, 44797 Bochum (DE); ODENTHAL, Hans-Jürgen, 40822 Mettmann (DE)
(74) Vertreter: Klüppel, Walter
(86) Internationale Anmeldenummer: PCT/DE2009/001097
(87) Internationale Veröffentlichungsnummer: WO 2010/015243

(56) Entgegenhaltungen:
- EP-A- 0 747 492
- WO-A-2006/089897
- US-A- 5 400 358
- US-A- 5 406 579
- US-A1- 2001 055 739

## Beschreibung

Die Erfindung betrifft eine kontinuierliche Schrottzuführung in einen elektrischen Schmelzofen (EAF), wobei ein Kanal vorgesehen ist, der an einem Ende mit einer Öffnung in der Wand des Schmelzofens verbunden ist und an seinem anderen Ende eine Aufgabeeinrichtung für den Schrott aufweist, sowie mit einer Absaugeinrichtung für die durch den Kanal geleiteten, zum Vorwärmen des Schrotts dienenden, Abgase aus dem Schmelzprozess, die zwischen den beiden Enden des Kanals an diesen angeschlossen Ist, wobei sich die Absaugeinrichtung - bezogen auf die Gesamtlänge des Kanals - näher dem dem Schmelzofen zugewandten Ende des Kanals befindet, als dem der Schrottaufgabe zugewandten Ende.

Die kontinuierliche Schrottzuführung in einen Elektrolichtbogenofen bzw. Schmelzofen ist beispielsweise aus der EP 744 585 B1, EP 190 313 B2, WO 2006/089897, US 5,406,579, US 5400358 oder WO 2007/006558 A2 bekannt.

Die Größe der Schrottstücke auf dem Zuführband kann mit einer Kantenlänge von < 1,5m dabei sehr groß sein. Daraus lässt sich eine entsprechende Öffnung in der Seite des EAF von ca. 2 bis 4 m² ableiten, die während des Schmelzens bei konventioneller Entstaubungstechnik in jedem Fall verschlossen werden müsste, da sonst ein zu hoher Falschlufteinfall in das Schmelzgefäß gelangen würde.

Das Gebläse zur Absaugung der Prozessgase steht bei der kontinuierlichen

Schrottzuführung heute typischerweise im Bereich der Schrottaufgebe, so dass die EAF Gase über eine große Strecke über den zugeführten Schrott gezogen werden.

Zur Reduktion des Falschlufteinfalls in den EAF und zur Steigerung der Effizienz der Entstaubung hat es in der Vergangenheit zwei Vorschläge gegeben:
1. Ein neben der Absaugung stehendes zweites Gebläse, dessen Leistung von dem
   Unterdruck in dem Schrott-Versorgungstunnel des EAF gesteuert wird oder
2. eine mechanische Sperre, die den Luftwiderstand am Eingang der Schrottaufgabe erhöhen soll.

Eine Regelung im Sinne der ersten Lösung ist sehr aufwändig und nur ungenügend zu überwachen. Darüber hinaus ist es sehr wartungsintensiv. Durch das doppelte Gebläse wird eine zusätzliche Menge an elektrischer Energie verbraucht.

Bei der zweiten Lösung werden Strömungswiderstände in den Schrottzuführtunnel eingebracht, die genau auf die Saugleistung und den Anfall an Prozessgasen dimensioniert werden müssen.

Bei beiden Lösungen wird das Ofengas (je nach Ausführung und Ofengröße) über eine Länge von 30 bis 50m abgesaugt, so dass es erkaltet ist und zur Unterdrückung der Emission von Furanen und Dioxinen über einen Stützbrenner wieder auf eine Temperatur von >700°C (Temperatur ist Funktion der O₂ Gehalte im Abgas) aufgewärmt werden muss.

Es ist nun bereits vorgeschlagen worden, dass sich die Absaugeinrichtung - bezogen auf die Gesamtlänge des Kanals - näher dem dem Schmelzofen zugewandten Ende des Kanals befindet, als dem der Schrottaufgabe zugewandten Ende.

Schrott und Abgase bewegen sich in dem Kanal in entgegengesetzter Richtung; während der Schrott in den Schmelzofen hineingefördert wird, wird das Abgas von dem Schmelzofen weg abgesaugt.

Die Absaugeinrichtung bzw. deren Schacht zum Absaugen der Abgase aus dem EAF, der mit einer kontinuierlichen Beschickung ausgeführt ist, wird an dem Kanal so platziert, dass die Absaugeinrichtung bzw. deren Schacht in der Nähe des Schmelzofens ist und die Distanz zur Aufgabeposition des Schrotts sowie der (möglichen) Zuschläge deutlich größer ist. Um den Strömungswiderstand im Bereich der Schrottaufgabe und damit die nutzbare Leistung der Absaugung bezogen auf den Lichtbogenofen zu erhöhen, können zudem bewegliche Klappen eingebracht werden.

Das Verhältnis Kanallänge zum EAF zur Kanallänge bis zur Schrottaufgabe könnte z. B. 1 zu 2 betragen.

Untersuchungen an bereits installierten EAFs mit kontinuierlicher Schrottbeschickung konnten zeigen, dass die Wärme einer merklichen Nachverbrennung der CO relchen Abgase nur lokal begrenzt auf den ersten Metern hinter dem Schmelzofen an den zugeführten Schrott abgegeben werden kann. Auch die sensible Wärme der Abgase können nur In diesem Bereich bedingt nutzbar gemacht werden.

Eine Platzierung des Ansaugstutzen als Funktion der Abgasmenge und der Leistung des EAF benötigt wegen der im Abgas befindlichen Restwärme keine oder nur eine begrenzte zusätzliche Energiemenge, die zur Einstellung der Abgastemperatur und damit zur Unterdrückung der Furane und Dioxine nötig ist.

Aufgabe der Erfindung ist es, über eine einstufige Absaugung eine effiziente Schrottvorwärmung zu erzielen und die Abgase der Heiz-, Schmelz- und chemischen Reaktionen aus dem EAF sicher zu entfernen, ohne dass eine zu große Menge an Falschluft über den Schrottzuführtunnel einfällt und daher die Saugzugleistung unnötig vergrößert werden muss.

Gelöst wird diese Aufgabe erfindungsgemäß mit einer kontinuierliche Schrottzuführung in einen elektrischen Schmelzofen (EAF), wobei ein Kanal vorgesehen ist, der an einem Ende mit einer Öffnung in der Wand des Schmelzofens verbunden ist und an seinem anderen Ende eine Aufgabeeinrichtung für den Schrott aufweist, sowie mit einer Absaugeeinrichtung für die durch den Kanal geleiteten, zum Vorwärmen des Schrotts dienenden, Abgase aus dem Schmelzprozess, die zwischen den beiden Enden des Kanals an diesen angeschlossen ist, wobei die Absaugeeinrichtung - bezogen auf die Gesamtlänge des Kanals - näher dem dem Schmelzofen zugewandten Ende des Kanals befindet, als dem der Schrottaufgabe zugewandten Ende, dadurch, dass die Absaugeeinrichtung als einstufiges Gebläse ausgebildet ist, dessen Ansaugöffnung im Wesentlichen in Richtung auf den Schmelzofen ausgerichtet ist, und dass der lichte Querschnitt des Kanalabschnittes zwischen der Ansaugeinrichtung und der Schrottaufgabe einen kleineren Querschnitt aufweist als der lichte Querschnitt des Kanalabschnittes zwischen der Ansaugvorrichtung und dem Schmelzofen und dass der lichte Kanalquerschnitt zwischen der Absaugeinrichtung und der Schrottaufgabe derart auf die zuzuführende Schrottmenge abgestimmt ist, dass die Höhe der Schrottschüttung den lichten Querschnitt weitestgehend ausfüllt.

Vorzugsweise erstreckt sich die Ansaugöffnung über die gesamte Breite der Schrottzuführung im Kanalabschnitt.

Besonders günstig ist es, wenn die Ansaugöffnung einen spitzen Winkel mit der Schrottzuführung im Kanalabschnitt bildet.

Nach einer weiteren Ausführung, die allerdings nicht so optimal ist, Ist die durch die Ansaugöffnung gebildete Ebene senkrecht zu der Schrottzuführung im Kanalabschnitt ausgerichtet.

Das Verhältnis der Länge des Kanals von der Absaugeinrichtung zum Schmelzofen bzw. zur Aufgabeeinrichtung kann 1 zu 6 betragen.

Außerdem können an dem der Aufgabeeinrichtung zugewandten Ende des Kanals in den freien Kanalquerschnitt ragende, bewegliche Klappen vorgesehen sein.

Erfindungsgemäß ist der Querschnitt des Kanals zwischen der Absaugeinrichtung und der Schrottaufgabe verglichen mit herkömmlichen Anlagen deutlich geringer, wobei die Abmessung des Kanals - also der lichte Querschnitt des Kanals, der für die Schrottzuführung zur Verfügung steht - so bemessen ist, dass die aufgegebene Schrottmenge weitestgehend diesen lichten Querschnitt ausfüllt. Unterstützt werden kann dies noch dadurch, dass über die Länge des Kanals verteilt zwischen der Absaugeinrichtung und der Schrottaufgabe, zusätzliche bewegliche oder flexible Klappen vorgesehen werden können, die einen noch verbleibenden Zwischenraum zwischen Kanalquerschnitt und Schrottoberfläche abdecken, so dass der für die eventuelle Ansaugung von Falschluft von der Schrottaufgabeseite her, minimiert ist.

Die Erfindung ermöglicht es, Schrott kontinuierlich in den EAF zu transportieren und ihn dabei unter optimaler Ausnutzung der Gebläseleistung effektiv vorzuwärmen. Durch den Einsatz einer auf die geometrischen Verhältnisse der Einhausung abgestimmten strömungstechnischen Absaugeinrichtung in der Nähe des Ofens wird das Ofenabgas gezielt abgesaugt und zur effizienten Schrottvorwärmung genutzt. Im Gegensatz zum früheren Stand der Technik wird das Abgas nur über den Bereich der Schrottschüttung geleitet, in dem eine effektive Aufheizung durch das Abgas stattfindet. Damit wird die Gebläseleistung gezielt zur Schrottvorwärmung genutzt und die Gebläsegröße und leistung kann geringer angesetzt werden als bei bisherigen Anlagen zur Schrottvorwärmung. Gleichzeitig wird durch bewegliche Klappen in der Einhausung im Bereich zwischen Schrottaufgabe und Absaugeinrichtung der Eintrag an Falschluft minimiert. Durch die Absaugung des

Ofenabgases bei hohen Temperatoren von über 700 °C wird zudem die Bildung von Dioxinen und Furanen unterbunden. Die Erfindung ermöglicht damit Kosteneinsparung bei gleichzeitiger Verringerung der Umweltbelastung.
Die Erfindung ergibt eine effiziente Lösung der Entstaubungsproblematik bei niedrigem Energieverbrauch im Falle der kontinuierlichen Schrottchargierung.

Die Erfindung soll nachfolgend an einem Ausführungsbeispiel erläutert werden.
Dabei zeigt die
Figur schematisch den Kanal für die Schrottzuführung in einen EAF.

Im Einzelnen ist der Kanal mit 1 bezeichnet. Dieser erstreckt sich von der Aufgabeeinrichtung für den Schrott, auf die der Pfeil 3 hinweist bis zur Abgabeseite, die in den EAF mündet. Diese Richtung deutet der Pfeil 4 an.

Nicht ersichtlich ist aus dieser schematischen Darstellung die Längenaufteilung des Kanals, wobei vorzugsweise der Abstand der Absaugeinrichtung 6 von der Aufgabeeinrichtung für den Schrott, kurz Schrottaufgabe genannt, - also der mit 2 bezeichnete Teil des Kanals 1, in etwa sechs mal so lang ist, wie der Abstand der Absaugeinrichtung 6 von dem Übergang zum EAF. Dieser Kanalteil ist mit 5 bezeichnet.

Die Transportrichtung des Schrotts ist mit dem Pfeil 7 und die des heißen Ofengases mit 8 bezeichnet.

Die aus dem EAF austretenden heißen Ofenabgase werden im Gegenstrom über den in Richtung des EAF transportierten Schrotts geleitet und wärmen diesen in bekannter Weise vor.

Aus der schematischen Darstellung ist ersichtlich, dass der Querschnitt des Kanals 1 im Abschnitt 2, also dem Bereich zwischen Schrottaufgabe 3 und Absaugeinrichtung 6, wesentlich kleiner ist, als im Abschnitt 5 zwischen Absaugeinrichtung 6 und EAF.

Dieser Querschnitt des Abschnittes 2 ist vorzugsweise so auf die zuzuführende Schrottmenge abgestimmt, dass der lichte Querschnitt dieses Kanalabschnittes vom zugeführten Schrott weitestgehend ausgefüllt ist. Ein noch verbleibender Restquerschnitt kann durch bewegliche oder flexible Klappen im Kanal ausgefüllt werden, so dass die durch die Absaugeinrichtung 6 von der Schrottaufgabeseite 3 angesaugte Falschluft durch die Schrottfüllung und ggf. die Klappen auf ein Minimum reduziert werden kann

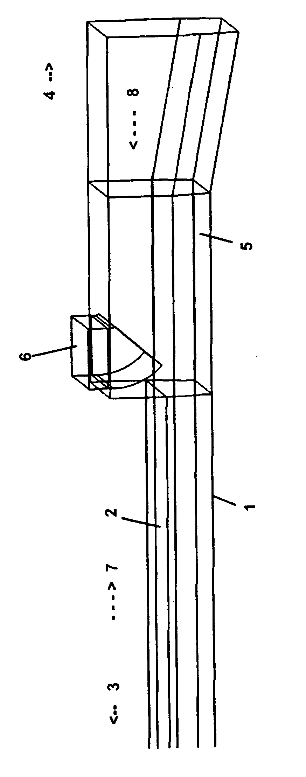

## Patentansprüche

1. Kontinuierliche Schrottzuführung in einen elektrischen Schmelzofen (EAF), wobei ein Kanal vorgesehen ist, der an einem Ende mit einer Öffnung in der Wand des Schmelzofens verbunden ist und an seinem anderen Ende eine Aufgabeeinrichtung für den Schrott aufweist, sowie mit einer Absaugeinrichtung für die durch den Kanal geleiteten, zum Vorwärmen des Schrotts dienenden, Abgase aus dem Schmelzprozess, die zwischen den beiden Enden des Kanals an diesen angeschlossen ist, wobei sich die Absaugeinrichtung - bezogen auf die Gesamtlänge des Kanals - näher dem dem Schmelzofen zugewandten Ende des Kanals befindet, als dem der Schrottaufgabe zugewandten Ende,
**dadurch gekennzeichnet,**
**dass** die Absaugeinrichtung als einstufiges Gebläse ausgebildet ist, dessen Ansaugöffnung im Wesentlichen in Richtung auf den Schmelzofen ausgerichtet ist, dass der lichte Querschnitt des Kanalabschnittes (2) zwischen der Absaugeinrichtung (6) und der Schrottaufgabe einen kleineren Querschnitt aufweist als der lichte Querschnitt des Kanalabschnittes (5) zwischen der Absaugeinrichtung und dem Schmelzofen und dass der lichte Querschnitt des Kanlabschnittes (2) zwischen der Absaugeinrichtung und der Schrottaufgabe derart auf die zuzuführende Schrottmenge abgestimmt ist, dass die Höhe der Schrottschüttung den lichten Querschnitt des Kanalabschnittes (2) weitestgehend ausfüllt.

2. Schrottzuführung nach Anspruch 1,
**dadurch gekennzeichnet,**
**dass** die Ansaugöffnung einen spitzen Winkel mit der Schrottzuführung im Kanalabschnitt (5) bildet.

3. Schrottzuführung nach Anspruch 1,
**dadurch gekennzeichnet,**
**dass** die durch die Ansaugöffnung gebildete Ebene senkrecht zu der Schrottzuführung im Kanalabschnitt (5) ausgerichtet ist.

4. Schrottzuführung nach einem der vorstehenden Ansprüche,
**dadurch gekennzeichnet,**
**dass** sich die Ansaugöffnung über die gesamte Breite der Schrottauführung im Kanalabschnitt (5)erstreckt.

5. Schrottzuführung nach einem der vorstehenden Ansprüche,
**dadurch gekennzeichnet,**
**dass** das Verhältnis der Länge des Kanals (5) von der Absaugeinrichtung zum Schmelzofen bezogen auf die Länge des Kanals (2) zwischen Schrottaufgabe und Absaugeinrichtung in etwa 1 zu 6 beträgt.

6. Schrottzuführung nach einem der vorstehenden Ansprüche,
**dadurch gekennzeichnet,**
**dass** an dem der Schrottaufgabe zugewandten Ende des Kanals (2) in den freien Kanalquerschnitt ragende, bewegliche Klappen vorgesehen sind.

7. Schrottzuführung nach einem der vorstehenden Ansprüche,
**dadurch gekennzeichnet,**
**dass** auf der Länge des Kanals (2) zwischen der Absaugeinrichtung und der Schrottaufgabe zusätzliche, in den freien Kanalquerschnitt ragende, bewegliche oder flexible Klappen vorgesehen sind.

## Claims

1. Continuous scrap feed in an electric arc smelting furnace (EAF), wherein a channel is provided which is connected at one end with an opening in the wall of the smelting furnace and has at its other end a delivery device for the scrap, as well as with a suction device for the exhaust gases, which are conducted through the channel and serve for preheating the scrap, from the smelting process, which suction device is connected with the channel between the two ends thereof, wherein the suction device is disposed closer, referred to the total length of the channel, to the end of the channel facing the smelting furnace than the end facing the scrap delivery, **characterised in that** the suction device is constructed as a single-stage fan, the suction opening of which is substantially aligned in direction towards the smelting furnace, that the clear cross-section of the channel section (2) between the suction device (6) and the scrap delivery has a smaller cross-section than the clear cross-section of the channel section (5) between the suction device and the smelting furnace and that the clear cross-section of the channel section (2) between the suction device and the scrap delivery is so matched to the quantity of scrap to be fed that the height of the scrap charge substantially fills out the clear cross-section of the channel section (2).

2. Scrap feed according to claim 1, **characterised in that** the suction opening forms an acute angle with the scrap feed into the channel section (5).

3. Scrap feed according to claim 1, **characterised in that** the plane formed by the suction opening is oriented perpendicularly to the scrap feed into the channel section (5).

4. Scrap feed according to any one of the preceding claims, **characterised in that** the suction opening extends over the entire width of the scrap feed into the channel section (5).

5. Scrap feed according to any one of the preceding claims, **characterised in that** the ratio of the length of the channel (5) from the suction device to the smelting furnace referred to the length of the channel (2) between the scrap delivery and the suction device is approximately 1 to 6.

6. Scrap feed according to any one of the preceding claims, **characterised in that** movable flaps projecting into the free channel cross-section are provided at the end of the channel (2) facing the scrap delivery.

7. Scrap feed according to any one of the preceding claims, **characterised in that** additional movable or flexible flaps projecting into the free channel cross-section are provided on the length of the channel (2) between the suction device and the scrap delivery.

## Revendications

1. Alimentation de riblons en continu dans un four à fusion à arc électrique (EAF), dans laquelle on prévoit un canal qui est relié, à une de ses extrémités, à une ouverture pratiquée dans la paroi du four à fusion et qui présente, à son autre extrémité, un dispositif d'alimentation pour les riblons, et qui comprend également un dispositif d'aspiration pour les gaz d'échappement qui se dégagent du processus de mise en fusion et qui servent à préchauffer les riblons, qui est raccordé auxdits gaz entre les deux extrémités du canal, le dispositif d'aspiration - par rapport à la longueur totale du canal - étant disposé plus près de l'extrémité du canal tournée vers le four à fusion que l'extrémité tournée vers l'alimentation des riblons, **caractérisée en ce que** le dispositif d'aspiration est réalisé sous la forme d'un ventilateur du type à un étage dont l'ouverture d'aspiration est orientée essentiellement dans la direction du four à fusion, **en ce que** la section transversale interne du tronçon de canal (2) s'étendant entre le dispositif d'aspiration (6) et l'alimentation des riblons présente une section transversale inférieure à la section transversale interne du tronçon de canal (5) s'étendant entre le dispositif d'aspiration et le four à fusion, et **en ce que** la section transversale interne du tronçon de canal (2) s'étendant entre le dispositif d'aspiration et l'alimentation des riblons est adaptée à la quantité de riblons à alimenter de telle sorte que la hauteur des riblons en vrac remplit le plus possible la section transversale interne du tronçon de canal (2).

2. Alimentation de riblons selon la revendication 1, **caractérisée en ce que** l'ouverture d'aspiration forme un angle aigu avec l'alimentation de riblons dans le tronçon de canal (5).

3. Alimentation de riblons selon la revendication 1, **caractérisée en ce que** le plan formé par l'ouverture d'aspiration est orienté perpendiculairement à l'alimentation de riblons dans le tronçon de canal (5).

4. Alimentation de riblons selon l'une quelconque des revendications précédentes, **caractérisée en ce que** l'ouverture d'aspiration s'étend sur toute la largeur de l'alimentation de riblons dans le tronçon de canal (5).

5. Alimentation de riblons selon l'une quelconque des revendications précédentes, **caractérisée en ce que** le rapport de la longueur du canal (5) s'étendant entre le dispositif d'aspiration et le four à fusion et la longueur du canal (5) s'étendant entre l'alimentation de riblons et le dispositif d'aspiration s'élève d'environ 1 à 6.

6. Alimentation de riblons selon l'une quelconque des revendications précédentes, **caractérisée en ce qu'**on prévoit, à l'extrémité du canal (2) tournée vers l'alimentation de riblons, des clapets mobiles faisant saillie dans la section transversale libre du canal.

7. Alimentation de riblons selon l'une quelconque des revendications précédentes, **caractérisée en ce qu'**on prévoit, sur la longueur du canal (2) s'étendant entre le dispositif d'aspiration et l'alimentation de riblons, des clapets supplémentaires mobiles ou flexibles, faisant saillie dans la section transversale libre du canal.
